# EUROPÄISCHE PATENTSCHRIFT

(11) **EP 2 412 516 B1**
(45) Veröffentlichungstag und Bekanntmachung des Hinweises auf die Patenterteilung: **27.07.2016**
(21) Anmeldenummer: 11004142.3
(22) Anmeldetag: 19.05.2011
(51) Int. Cl.: B30B 15/06, B30B 15/02, B41C 1/00, B44C 3/02, B05D 5/00, B05D 1/36, B29C 33/38, B29C 67/00, B29C 33/42, B05D 7/00, B05D 5/06, B44B 5/02

(54) **Verfahren zur Herstellung einer Matrize**
Process to manufacture a die plate
Procédé de fabrication d'une matrice

(30) Priorität: 28.07.2010 DE 102010036687
(43) Veröffentlichungstag der Anmeldung: 01.02.2012
(73) Patentinhaber: Westag & Getalit AG, 33378 Rheda-Wiedenbrück (DE)
(72) Erfinder: Seidenberg, Annette, Dr., 33604 Bielefeld (DE)
(74) Vertreter: Sroka, Peter-Christian

(56) Entgegenhaltungen:
- EP-A1- 2 199 065
- WO-A1-2006/045178
- WO-A1-2008/047127
- DE-A1- 19 834 559
- DE-T2- 60 115 009
- JP-A- 2005 205 670
- US-A1- 2005 212 184

## Beschreibung

Die Erfindung betrifft ein Verfahren zur Herstellung einer Matrize, mit der in eine Hochdruck-Schichtstoffplatte eine dreidimensionale Original-Positiv-Struktur einpressbar ist gemäß dem Oberbegriff des Anspruchs 1.

### Oberflächenstrukturen

HPL (High Pressure Laminate) bestehen in der Regel aus mehreren Lagen eines phenolbeharzten Kraftpapiers, und sie tragen als Oberflächenschicht meistens ein mit transparentem Melaminharz imprägniertes Dekorpapier. Das Dekorpapier ist in der Regel eingefärbt oder bedruckt. Nahezu alle Farben und Dekore, die über Druck herstellbar sind, lassen sich mit imprägnierfähigem Papier zu HPL verpressen.

### Zweck einer dreidimensionalen Original-Positiv-Struktur

Um das Aussehen des Dekors zu verbessern, lässt sich die HPL-Oberfläche strukturieren, wodurch eine Original-Positiv-Struktur entsteht. So kann man zum Beispiel zu einem Holzdekor eine "passende" Holzpore (Vertiefung) in die Oberfläche pressen, um die Kunststoff-Oberfläche "natürlicher" aussehen zu lassen.

Eine Steindekor-Oberfläche kann eine "schieferartige" Oberfläche aus Flächen mit Erhebungen und Vertiefungen erhalten, um so noch "steiniger" auszusehen.

Solche Oberflächenstrukturen haben aber nicht nur eine optisch-gestalterische sondern auch eine praktische Funktion.

Zum Beispiel ermöglicht eine "sandartige" Oberfläche bei Küchenarbeitsplatten gute Abrieb- und Kratzfestigkeiten. Dies ist möglich, weil zum Beispiel bei einer Küchenarbeitsplatte der hin- und hergeschobene Teller nur die "Spitzen" der Sand-Struktur berührt. Da nur die Spitzen abnutzen, ist eine lange Lebensdauer möglich.

Original-Positiv-Strukturen können also sowohl eine Vertiefung als auch eine Erhöhung der Oberfläche sein. Diese Strukturen führen zu einer "Dreidimensionalität" der Oberfläche.

### Erzeugung von Strukturen

Um Original-Positiv-Strukturen in HPL einpressen zu können, werden bei der HPL-Produktion in der Regel Matrizen aus zum Beispiel Pressblech eingesetzt. Diese Bleche aus Messing oder Stahl sind an der Oberfläche dreidimensional strukturiert und vorzugsweise verchromt und deshalb recht haltbar.

Als Vorlage dienen zum Beispiel vorhandene Strukturen aus der Natur wie zum Beispiel echte strukturierte Steinplatten oder eher technische Vorlagen wie gefräste Bleche, Metallgitter, aber auch widerstandsfähige Textilien, etc..

Je nach Vorlage gibt es mehrere Verfahren zum Anbringen von Original-Positiv-Strukturen auf Blechen. Zum Beispiel können die Original-Positiv-Strukturen mit ihren Erhebungen und Vertiefungen abgescannt, in digitale Daten umgesetzt und schließlich über einen dünnen Film für den Einsatz einer Ätzvorlage verarbeitet werden. Die Strukturen werden dann als Negativ-Strukturen der Original-Positiv-Strukturen durch einen oder mehrere Ätzvorgänge in verschiedenen Tiefen mit Säure in das Blech eingeätzt.

Zu beachten ist, das Vertiefungen im Blech bei der HPL-Produktion Erhebungen erzeugen. Wenn man umgekehrt beim HPL Vertiefungen erhalten will, zum Beispiel Hohlporen, muss das Blech Erhebungen erhalten.

Die Beschaffung von Pressblechen ist sehr kostspielig und lohnt sich nur bei der HPL-Fertigung in großen Stückzahlen und über einen langen Zeitraum.

### Produktion mit Matrizen

Um bei speziellen Oberflächen, die die Investition in Blechmatrizen nicht rechtfertigen, dennoch Abpressungen machen zu können, gibt es auch die Möglichkeit sogenannter "Blechersatz-Matrizen".

Dazu wird eine Vorlage, die Druck und Hitze widerstehen kann, zusammen mit harzimprägnierten Papieren in eine Presse gelegt, in der unter hohem Druck und Hitze das Harz der Papierschicht zunächst erweicht und sich die Struktur der Vorlage in die Oberfläche der Papierschicht einpressen kann. Danach wird die beharzte Papierschicht ausgehärtet, und gibt damit die umgekehrte Struktur der Vorlage wieder. Was im Original eine Erhebung ist, wird in der HPL-Schicht der Matrize eine Vertiefung oder umgekehrt. Die Matrize ist also quasi ein HPL-Laminat mit eingepresster gegenteiliger Negativ-Struktur.

Diese Matrize wird als Ersatz für ein Pressblech zusammen mit einer Aluminium-Trennfolie, die das Verkleben von Matrize und Laminat verhindern soll, und den Laminatpapieren in die Presse gelegt. Das erweichende Harz des Laminatpapiers legt sich in die Negativ-Strukturen der Matrize und erhält eine Positiv-Struktur; das fertige Laminat entspricht dann der OriginalVorlage.

### Patrizen

Bei der HPL-Produktion werden in der Regel mehrere Matrizen benötigt. Um zu deren Herstellung nicht immer auf eine Original-Patrize zurückgreifen zu müssen, die in der Presse beschädigt werden könnte, werden meistens von einer Matrize mit ihrer Negativ-Struktur wieder mehrere Patrizen mit positiver Original-Struktur gepresst. Diese Patrizen dienen dann zur Herstellung weiterer Matrizen.

Bei der HPL-Produktion ist die Patrize demnach die Positiv-Pressform, die dem Original entspricht und die sowohl Erhebungen wie Vertiefungen aufweist und zur Herstellung von HPL-Poduktions-Matrizen dienen kann.

Die Matrize ist die Negativ-Gegenform, deren Struktur das umgekehrte Abbild der Patrize bzw. der Originalvorlage wiedergibt. Die Matrize dient entweder zur Produktion von HPL mit Original-Struktur oder zur Produktion von Patrizen mit Original Struktur.

Patrize und Matrize haben beide in der Regel einen ähnlichen Schichtaufbau wie HPL und können zur Erhöhung der Stabilität beispielsweise mit einem dickeren Schichtaufbau ausgerüstet werden.

Gemäß DE 10 2006 053 622 A1 ist es zum Bedrucken von Trägerstoffen bekannt, den sogenannten Digitaldruck einzusetzen. Dabei werden beispielsweise Dekorfilme aus mit Melaminharz getränktem Papier in großen Mengen eingesetzt, um Spanplatten und andere Substrate zu beschichten, beispielsweise zur Imitation einer Holzoberfläche. Beim Digitaldruck wird ein einziges einschichtiges Druckbild direkt von einem Computer in eine Druckmaschine übertragen, ohne dass eine statische Druckform benutzt wird. Dabei werden meistens vier oder mehr Farbnuancen in Druckköpfen verwendet, zum Beispiel drei Druckköpfe für die Grundfarben gelb, cyan und magenta und einer für schwarz. Der Digitaldruck ist insbesondere für kleinere Auflagenzahlen kostengünstiger als zum Beispiel der Offset-Druck.

Gemäß EP 1 477 319 A2 werden bei der Digitaldrucktechnik die Druckfarben, meist als Drucktinte bezeichnet, computergesteuert in feinster Sprühtechnik direkt auf das Substrat bzw. einen Trägerwerkstoff übertragen.

Die WO 2008/047127, die ein Verfahren gemäß dem Oberbegriff des Anspruchs 1 beschreibt, betrifft das Prägen von plastisch oder elastisch verformbaren Leder- oder Vinylsubstraten unter Verwendung einer die Negativ-Original-Struktur aufweisenden Prägeplatte bzw. Matrize. Die Herstellung dieser Prägeplatte bzw. Matrize erfolgt in der folgenden Weise, nämlich:
- Herstellen, beispielsweise mittels eines 3D-Druckverfahrens, einer Patrize mit einer texturierten Oberfläche entsprechend der Original-Positiv-Struktur;
   Von dieser "positiven" Patrize wird in einer Gießform die die Negativstruktur aufweisende Prägeplatte bzw. Matrize abgegossen, indem die Patrize in diese Gießform gelegt und in die Gießform ein aushärtbares Polymer-Vorläufermaterial oder ein Harz, z.B. Epoxyharz, gegossen wird, in dem Keramikpartikel dispergiert sein können. Die durch Abgießen erhaltene Matrize kann anschließend als Prägewerkzeug für das Leder- oder Vinylsubtrat verwendet werden, das verglichen mit Hochdruck-Schichtstoffplatten bzw. HPL nur eine geringe Festigkeit bzw. Härte haben.

Gemäß DE 601 15 009 T2 kann eine im Digital-Druckverfahren hergestellte Patrize mit einer dreidimensionalen Original-Positiv-Struktur dazu verwendet werden, um eine oder mehrere Matrizen herzustellen, indem ein formbares Material in Kontakt mit der Patrize gebracht wird, sich an die Patrize anpasst, gehärtet wird und dann von der Patrize abgenommen wird, d.h. von der Patrize wird in einem Abformvorgang durch Gießen eine Matrize hergestellt, die die Original-Negativ-Struktur aufweist. Das Material, aus dem die Matrize hergestellt wird, kann jedes geeignete thermoplastische oder wärmehärtender Harz sein, wobei jedoch aus vielerlei Gründen ein A-Silikonpolymer bevorzugt wird. Diese Matrize wird anschließend verwendet, um die strukturierte Oberfläche eines beschichteten Schleifmittels zu erschaffen. Die zu behandelnde Oberfläche besteht aus härtbarem Harz, das, während es in Kontakt mit der Matrize steht, wenigstens teilweise gehärtet wird.

Der Erfindung liegt die Aufgabe zugrunde, ein vereinfachtes Verfahren zur Herstellung einer Matrize zu schaffen, mit der eine Hochdruck-Schichtstoffplatte bzw. ein High Pressure-Lamiate (HPL) eine Original-Positiv-Struktur eingepresst werden kann.

Diese Aufgabe wird gelöst mit einem Verfahren gemäß dem Patentanspruch.

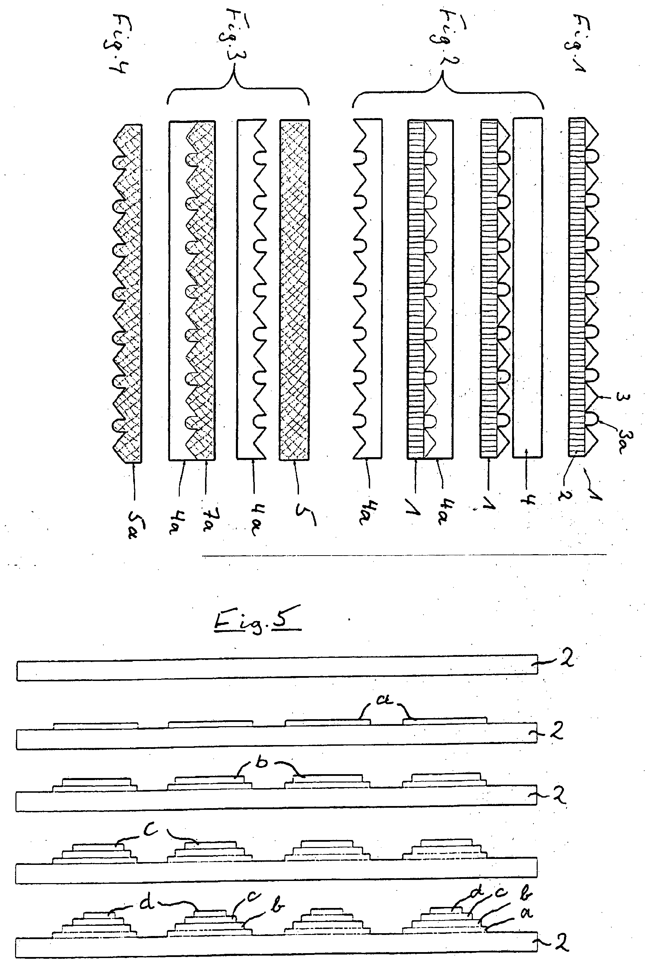

Die Erfindung wird im folgenden anhand der Figuren 1 bis 5 beschrieben.

### Terminologie:

Das fertige HPL hat eine dreidimensionale Original-Positiv-Struktur;
- die Patrize besteht aus einem Trägerwerkstoff mit durch Digitaldruck aufgetragener Original-Positiv-Abbildung, deren Struktur mit der erwünschten Original-Positiv-Struktur der fertigen HPL übereinstimmt;
- die von einer solchen Patrize abgepresste Matrize hat eine Negativ-Stuktur der Original-Positiv-Struktur bzw. der Original-Positiv-Abbildung.

Gemäß Figur 1 wird eine Original-Positiv-Abbildung der Patrize 1 hergestellt, indem mittels eines Digital-Druckers auf einen Trägerwerkstoff 2 aufeinanderfolgend mehrere Tintenschichten zur Bildung unterschiedlich geformter reliefartiger Vorsprünge 3, 3a aufgetragen werden, wobei eine bei UV-Bestrahlung schnell trocknende Tinte verwendet wird.

Gemäß Figur 2 wird in einem zweiten Schritt eine Matrize 4a abgepresst, indem ein vorzugsweise beharztes Papierschichtenlaminat 4 auf die Patrize 1 aufgelegt und damit verpresst, und anschließend die Patrize 1 entfernt wird.

Gemäß Figur 3 wird nach Drehen der Matrize 4a, die die Negativ-Struktur der Original-Positiv-Abbildung der Patrize 1 aufweist, ein beharztes Papierschichtenlaminat 5 mit der Matrize 4a verpresst, so dass als Ergebnis das fertige HPL 5a mit der erwünschten Original-Positiv-Struktur erhalten wird.

Die Herstellung der Original-Positiv-Struktur der Patrize 1 ist schematisiert in Figur 5 dargestellt. Auf einen Trägerwerkstoff 1 werden mittels eines Digital-Druckers aufeinanderfolgend mehrere sich überlagernde Tintenschichten a, b, c und d aufgetragen, wodurch die reliefartig vorspringenden Strukturen entstehen.

## Patentansprüche

1. Verfahren zur Herstellung einer Matrize, mit der in eine Hochdruck-Schichtstoffplatte bzw. ein High-Pressure-Laminate (HPL) eine dreidimensionale Original-Positiv-Struktur einpressbar ist, **dadurch gekennzeichnet, dass** man im Digital-Druckverfahren mehrere Schichten einer bei UV-Bestrahlung schnell trocknenden Tinte derart aufträgt, dass eine die Original-Positiv-Struktur aufweisende Patrize erhalten wird, von der die Matrize (4a) abgepresst wird.

## Claims

1. Method for producing a matrix for impressing a three-dimensional original-positive structure into a high-pressure laminate panel or a high-pressure laminate (HPL), respectively, **characterized in that** in a digital printing process several layers of an ink, which is fast drying under UV-radiation are applied such that a patrice having the original-positive structure is obtained, from which the matrix (4a) is embossed.

## Revendications

1. Méthode de fabrication d'une matrice pour imprimer une tridimensionnelle originale-positive structure dans un panneau stratifié haute pression ou haute pression-laminate (HPL), respectivement, caractérisée en e que plusieurs couches d'une encre à séchage rapide sous UV-irradiation sont appliquées dans un procédé d'imprimerie numérique de telle façon qu'une contre matrice comprenant une originale-positive structure est obtenue, de laquelle contre matrice la matrice (4a) est imprimée.
